# FASCICULE DE BREVET EUROPEEN

(11) **EP 2 783 113 B1**
(45) Date de publication et mention de la délivrance du brevet: **30.10.2019**
(21) Numéro de dépôt: 12806556.2
(22) Date de dépôt: 23.11.2012
(51) Int. Cl.: F04B 33/00, F04B 33/02, B60C 23/10

(54) **DISPOSITIF DE COMPRESSION D'AIR POUR CYCLE**
LUFTVERDICHTENDE VORRICHTUNG FÜR EIN RAD
AIR-COMPRESSING DEVICE FOR A CYCLE

(30) Priorité: 23.11.2011 FR 1103575; 03.05.2012 FR 1254073; 07.06.2012 FR 1255327
(43) Date de publication de la demande: 01.10.2014
(73) Titulaire: Aghilone, Marcello, 34120 Pezenas (FR); TECHNOFLUID ENGINEERING S.r.l., 20811 Cesano Maderno (MI) (IT)
(72) Inventeur: AGHILONE, Marcello, 34120 Pezenas (FR)
(74) Mandataire: Rhein, Alain
(86) Numéro de dépôt international: PCT/FR2012/052706
(87) Numéro de publication internationale: WO 2013/076429

(56) Documents cités:
- EP-A2- 1 353 068
- WO-A1-96/22216
- US-A- 1 417 677

## Description

La présente invention entre dans le domaine de la compression et du stockage d'air comprimé. Plus particulièrement, l'invention est appliquée aux cycles en se servant du mouvement de pédalage pour comprimer et stocker de l'air comprimé, en vue d'une utilisation ultérieure.

De manière connue, le gonflage de la chambre à air des roues d'un cycle s'effectue manuellement par pompage au moyen d'une pompe sous forme d'un piston. Cette opération est fastidieuse et physiquement contraignante. Afin de faciliter cette opération de gonflage, des cartouches enfermant de l'air comprimé permettent de gonfler rapidement et sans effort la chambre à air. Toutefois, une fois vidée, la cartouche devient inutilisable jusqu'à son rechargement ou son remplacement.

De ce constat, il a été imaginé de se servir du mouvement de pédalage lors de l'utilisation du cycle, afin de comprimer et de stocker de l'air comprimé qui servira ultérieurement au gonflage des chambres à air.

Une solution envisagée a été de se servir du cadre même du cycle, constitué de tubes creux soudés entre eux, afin de constituer des réservoirs d'air comprimé. Les documents FR 2 624 085 et FR 459 989 décrivent l'utilisation d'au moins une section d'un tube constituant le cadre, rendue étanche, pour servir de réservoir d'air comprimé. Cette section est percée d'un orifice sur lequel est montée une valve permettant le remplissage et l'extraction de l'air comprimé. De plus, un manomètre peut être monté au niveau de cette section pour indiquer la pression et ainsi la quantité d'air contenue dans ce réservoir.

L'inconvénient majeur de cette solution réside dans le remplissage du cadre, qui doit être réalisé par un système externe de compression d'air. De plus, le cadre doit être entièrement dédié à cet effet et n'est donc pas compatible avec tout type de cycle.

Le document WO 96/22216 tente de pallier cet inconvénient en ajoutant des moyens de compression d'air actionnés par le pédalage, toujours en vue de remplir un réceptacle étanche constitué par une partie du cadre du cycle. Plus particulièrement, les moyens de compression sont constitués par un unique piston articulé avec le pédalier du cycle, formant une came selon un système mécanique de bielle-manivelle, de manière à transformer la rotation du pédalier en un mouvement de translation dudit piston, en vue de remplir le réservoir intégré.

Outre l'inconvénient d'utiliser encore une fois le cadre comme réservoir, cette solution pose un problème technique majeur : la force nécessaire à manœuvrer le piston pour comprimer l'air jusqu'à une pression suffisante, supérieure à 10 bars (1 000 000 Pa), est trop importante et offre donc une trop grande résistance au pédalage pour le cycliste. De plus, une telle force de compression nécessiterait un piston d'une trop grande longueur ou bien d'un diamètre trop important. Enfin, les efforts de compression entraineraient des contraintes thermiques trop élevées, en particulier une chauffe du piston susceptible de le dégrader et de brûler l'utilisateur.

Le document EP 0 507 007 décrit encore un autre système de compression d'air utilisant la rotation du pédalier pour manœuvrer un piston et remplir un réservoir d'air comprimé, mais en vue de servir d'énergie pneumatique pour faciliter le pédalage, notamment en montée. L'unique piston pose les mêmes problèmes que précédemment décrit, rendant techniquement irréalisable ce type de système.

La présente invention a pour but de pallier les inconvénients de l'état de la technique, en proposant un dispositif de compression d'air pour cycle comme décrit dans la revendication 1, utilisant au moins deux pistons de compression, un « basse pression » et un « haute pression », l'air comprimé au sein du piston basse pression étant transféré au sein du piston haute pression afin de faciliter sa compression.

Ainsi, un tel dispositif coopère avec un pédalier équipant ledit cycle et comprend au moins une cartouche de stockage d'air comprimé et des moyens de compression reliés à ladite cartouche et constitués :
- de moyens d'engrènement avec ledit pédalier, et
- d'au moins une première et une deuxième chambres de compression équipées chacune d'un piston à air, caractérisé par le fait que lesdits moyens d'engrènement sont connectés à chaque piston et entraîne leur course en translation, de manière à mettre en compression leur chambre respective,
et en ce que ladite première chambre est reliée à ladite deuxième chambre de manière à transférer l'air comprimé au sein de cette première chambre vers ladite seconde chambre lors de la compression de cette dernière.

Une telle solution à deux pistons, ou plus, permet de diminuer la force nécessaire à la compression pour obtenir de l'air comprimé à plusieurs dizaines de bars, en particulier entre 25 et 35 bars. De plus, l'utilisation de deux pistons diminue les contraintes thermiques dues aux efforts de compression et les répartit sur chacun d'entre eux.

De plus, selon d'autres caractéristiques additionnelles, lesdits moyens d'engrènement peuvent comprendre au moins une première roue d'entraînement dudit premier piston et au moins une deuxième roue d'entraînement dudit deuxième piston, lesdites roues étant montées et entraînées en rotation par une roue d'engrènement avec ledit pédalier, chaque piston étant monté articulé excentré avec sa roue d'entraînement respective de manière à constituer des systèmes mécaniques de bielle-manivelle.

Préférentiellement, lesdits moyens d'engrènement peuvent comprendre un disque d'engrènement équipé de moyens de fixation avec ledit pédalier, ledit disque étant crénelé selon une denture de formes et dimensions complémentaires à la denture équipant ladite roue d'engrènement.

Selon un mode de réalisation, ledit dispositif peut comprendre des moyens de commande de l'accouplement en engrènement de ladite roue d'engrènement avec ledit disque et permettant d'embrayer ou de débrayer manuellement ledit accouplement.

Selon un autre mode de réalisation, lesdits moyens de commande peuvent comprendre des moyens de mesure de la pression interne de ladite cartouche, commandant automatiquement le débrayage dudit accouplement au-delà d'un seuil déterminé.

Par ailleurs, ladite première chambre peut comprendre des dimensions telles que la pression d'air comprimé est inférieure à la pression d'air comprimé par ladite seconde chambre.

En outre, la première chambre peut être reliée à la deuxième chambre par l'intermédiaire d'un clapet anti-retour autorisant uniquement le passage de l'air comprimé depuis ladite première chambre vers ladite deuxième chambre.

Selon un autre mode de réalisation, ladite roue d'engrènement peut se présenter sous la forme d'une unique roue de forme spécifique et complémentaire, de manière à venir coopérer directement en engrènement avec la denture dudit plateau, les dents de ladite roue étant de forme oblongue, tels des lobes.

Selon un mode similaire mais différent, ladite roue d'engrènement peut se présenter sous la forme d'une roue présentant une denture sur laquelle vient coopérer une chaînette à maillons enroulée autour de ladite roue.

D'autres caractéristiques et avantages de l'invention ressortiront de la description détaillée qui va suivre des modes de réalisation non limitatifs de l'invention, en référence aux figures annexées, dans lesquelles :
- la figure 1 représente une vue schématisée globale d'un mode de réalisation du dispositif de compression en engrènement avec le pédalier d'un cycle ;
- la figure 2 représente schématiquement une vue en perspective du dispositif seul selon un premier mode de réalisation ;

- la figure 3 représente schématiquement une vue mettant en évidence par transparence le mécanisme dudit dispositif, sans sa cartouche de stockage d'air comprimé, selon ledit premier mode de réalisation ;
- la figure 4 représente schématiquement une vue mettant en évidence par transparence le mécanisme dudit dispositif, sans sa cartouche de stockage d'air comprimé, selon un autre mode de réalisation ;
- la figure 5 représente schématiquement une vue de détail de l'engrènement dudit dispositif avec le pédalier dudit cycle selon le mode de réalisation de la figure 4 ;
- la figure 6 représente schématiquement une vue d'un autre mode de réalisation différent du dispositif en position désaccouplée ;
- la figure 7 représente une vue similaire à la figure 6 du dispositif en une position accouplée avec le pédalier ; et
- la figure 8 représente une vue schématique d' encore un autre mode de réalisation d'un détail du dispositif.

La présente invention concerne un dispositif 1 de compression d'air pour cycle 2.

En particulier, un tel dispositif 1 se sert du pédalage pour comprimer de l'air en vue de le stocker pour une utilisation ultérieure, notamment le gonflage de la chambre à air d'une roue, mais aussi l'approvisionnement en air d'un système d'amortisseur à air équipant éventuellement ledit cycle 2.

A ce titre, le cycle 2 est pourvu d'un pédalier d'entraînement 200 constitué d'au moins un plateau 201 monté en rotation par rapport au cadre 207 autour d'un axe 202 solidaire des pédales 203. De façon connue, l'appui sur les pédales 203 entraine la rotation de l'axe 202 et du plateau 201 qui, par un système d'engrènement avec une chaîne 204, vient actionner au moins un pignon 205 solidaire de la roue arrière 206 montée en rotation, permettant l'avancement du cycle 2.

Le dispositif de compression 1 selon l'invention vient s'adapter au système de propulsion du cycle 2, au niveau du pédalier 200, pour coopérer avec ce dernier en engrènement et se servir de sa rotation lors du pédalage pour comprimer de l'air.

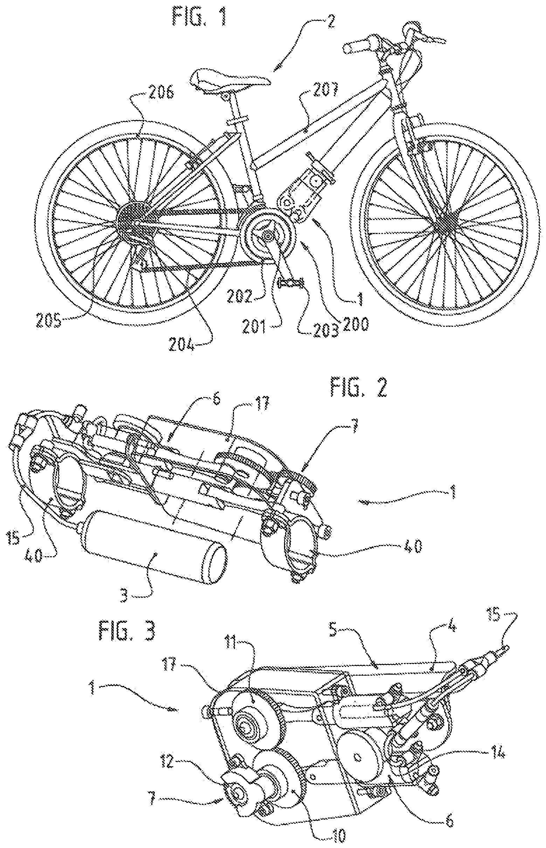

A cet effet, ledit dispositif 1 comprend au moins une cartouche 3 de stockage d'air comprimé. Comme visible sur la figure 2, ladite cartouche 3 peut se présenter sous la forme d'un réservoir étanche, de forme cylindrique, pourvu à une extrémité d'un orifice d'entrée et de sortie d'air, assurant respectivement son remplissage et son vidage.

Avantageusement, ledit dispositif 1 peut être prévu amovible par rapport au cadre 207 dudit cycle 2.

Selon un premier mode de réalisation, représenté sur la figure 3, le dispositif 1 peut être monté sur une platine 4 pourvue de deux trous traversants 5, afin de permettre le passage de vis (non représentées) qui viennent coopérer avec les taraudages ménagés au sein du cadre 207 du cycle 2, de façon standard pour la réception de divers équipements, comme par exemple le porte-bidon.

On notera que les trous 5 peuvent être prévus oblongs, afin de s'adapter aux différents entraxes desdits taraudages.

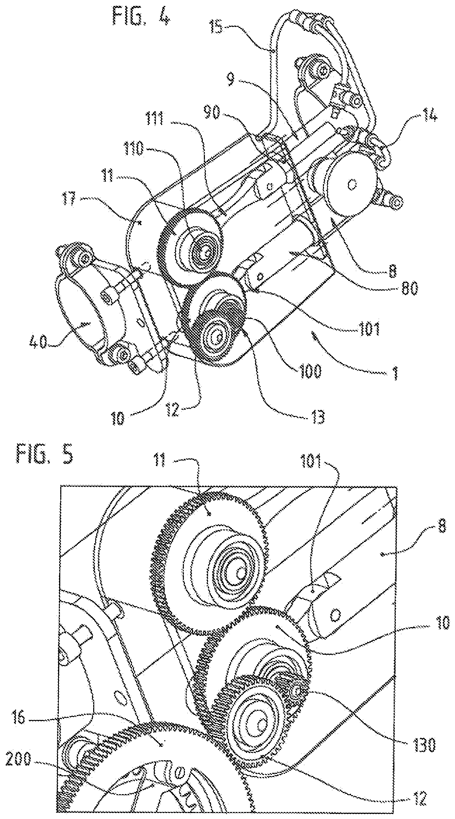

Selon un autre mode de réalisation, représenté sur les figures 2 et 4, deux anneaux 40 se présentant sous la forme de deux demi-cercles, coopérant par vissage à chacune de leurs extrémités, assurent le maintien en fixation du dispositif 1 par enserrement des tubes du cadre 207 du cycle 2.

Ainsi, le dispositif 1 peut être facilement retiré, évitant qu'on le vole. De plus, selon le second mode de réalisation, il peut être positionné avec précision et sur plusieurs types de cadres à section tubulaire.

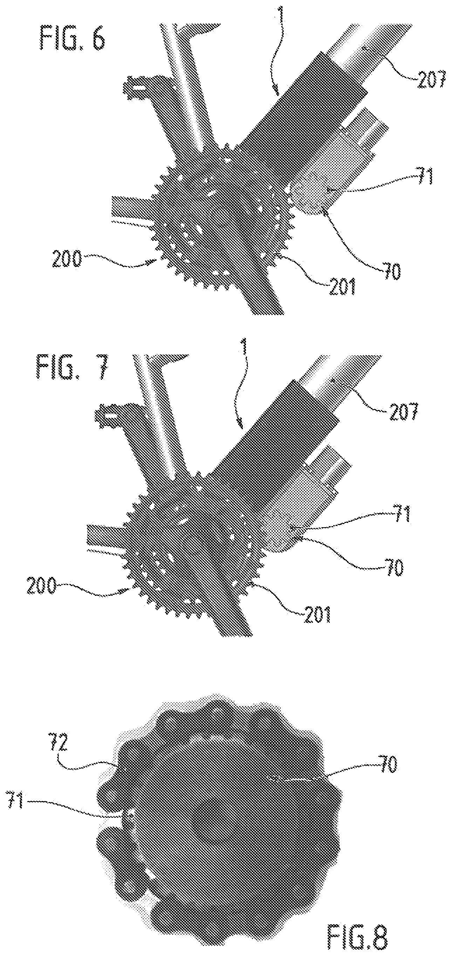

Par ailleurs, ledit dispositif 1 peut être entouré d'une enveloppe protectrice ou carter, de forme sensiblement parallélépipédique, notamment avec des coins et des arêtes arrondies, comme visible sur les figures 7 et 8. Un tel carter peut présenter une face amovible ou articulée de manière à accéder à l'intérieur, en vue de fixer le dispositif 1 sur le cycle 2, pour sa maintenance ou bien pour retirer la cartouche 3.

A ce titre, ladite cartouche 3 peut elle aussi est montée amovible par rapport au dispositif 1, au travers d'une fixation par attache rapide, notamment de type clipsage ou verrouillage élastique, de manière à permettre son positionnement et surtout son extraction pour être manipulée rapidement et simplement, notamment lors de l'opération de gonflage. Ainsi, l'amovibilité de cette cartouche 3 permet à un utilisateur de regonfler les roues de son propre cycle 2, mais aussi celles d'un autre vélo, notamment d'un accompagnateur.

Avantageusement, ledit dispositif 1 comprend des moyens de compression 6 reliés à ladite cartouche 3. Ces moyens 6 sont constitués au moins de moyens d'engrènement 7 avec ledit pédalier 200 et d'au moins une première 8 et une deuxième 9 chambres de compression équipées chacune d'un piston à air, à savoir un premier piston 80 et un deuxième piston 90 coulissant à l'intérieur de chaque chambre 8,9.

Plus particulièrement, lesdits moyens d'engrènement 7 sont connectés à chaque piston 80,90 et entraînent leur course en translation, de manière à mettre en compression leur chambre respective 8,9.

Selon un mode particulier de réalisation, représenté sur les figures, ladite première chambre 8 comprend des dimensions telles que la pression d'air comprimé est inférieure à la pression d'air comprimé par ladite seconde chambre 9. En somme, le premier piston 80 présente une compression moins élevée que le second piston 90.

Préférentiellement, ledit premier piston 80 avec sa chambre 8 peut présenter un diamètre plus grand que le deuxième piston 90 avec sa chambre 9, pour une course identique. A titre d'exemple non limitatif, ledit premier piston 80 présente un diamètre de 18 millimètres, tandis que le deuxième piston 90 a un diamètre de 8 millimètre, pour une longueur identique.

Ainsi, la force nécessaire à comprimer le premier piston 80 doit être moins importante que la forcé nécessaire pour comprimer le deuxième piston 90. Selon les données précédentes, le premier piston 80 compresse l'air à une pression d'environ 26 bars, alors que le deuxième piston compression l'air à une pression supérieure ou égale à 25 bars, notamment entre 25 et 35 bars, préférentiellement entre 26 et 35 bars. Le premier piston 80 est donc un piston de plus basse pression que le deuxième piston 90.

Avantageusement, afin de permettre la compression du deuxième piston 90 de plus haute pression, le dispositif 1 prévoit de transférer l'air en compression depuis la première chambre 8 vers la deuxième chambre 9, lors de la compression de cette dernière. Pour ce faire, ladite première chambre 8 est reliée à ladite deuxième chambre 9. En somme, la force moindre nécessaire pour comprimer l'air au sein de la première chambre 8, permet de remplir en partie la seconde chambre 9 et ainsi de diminuer la force nécessaire à la compression de la deuxième chambre 9.

Plus précisément, lors du fonctionnement, les pistons 80 et 90 peuvent être déphasés. En d'autres termes, la translation du premier piston 80 au sein de sa chambre 8 est décalée par rapport à la translation du deuxième piston 90 au sein de sa chambre 9. Ce décalage assure que la compression du premier piston 80 commence ou est en cours, voire peut être terminée, au moment où la compression du deuxième piston commence ou est en cours.

Selon le mode préférentiel de réalisation, la compression du premier piston 80 s'achève au moment où commence la compression du deuxième piston 90. Pour ce faire, les pistons 80 et 90 sont déphasés de 180 degrés par rapport aux moyens d'engrènement 7.

On notera que ladite première chambre 8 est reliée à la seconde chambre 9 par l'intermédiaire d'au moins un canal 14, notamment sous forme d'une durite, connecté de manière étanche à l'extrémité de chaque chambre de compression 8,9.

De plus, la première chambre 8 peut être reliée à la deuxième chambre 9 par l'intermédiaire d'un clapet anti-retour, autorisant uniquement le passage de l'air comprimé depuis ladite première chambre 8 vers ladite deuxième chambre 9, évitant tout reflux.

Par ailleurs, ladite seconde chambre 9 est reliée à ladite cartouche 3 par l'intermédiaire d'au moins un canal similaire 15. Les connexions s'effectuent de manière étanche et peut comporter aussi un clapet anti-retour, autorisant uniquement la circulation du flux d'air comprimé depuis la seconde chambre 9 vers la cartouche 3. De plus, la connexion entre le canal 15 et la cartouche 3 peut s'effectuer de manière amovible, notamment par vissage, et étanche, notamment avec un joint d'étanchéité, par exemple de type torique. Une valve actionnée manuellement ou automatiquement peut contrôler l'ouverture ou la fermeture de la cartouche. Il est ainsi possible de retirer la cartouche 3 pour s'en servir à un autre endroit, en la connectant à la valve d'une chambre à air du cycle 2 ou d'un autre cycle, à un amortisseur ou autre.

Avantageusement, selon le mode de réalisation préférentiel, lesdits moyens d'engrènement 7 comprennent au moins une première roue d'entraînement 10 dudit premier piston 8 et au moins une deuxième roue 11 d'entraînement dudit deuxième piston 9. De plus, lesdites roues 10,11 sont montées et entraînées en rotation par une roue d'engrènement 12 avec ledit pédalier 200. En somme, ladite roue d'engrènement 12 est entraînée en rotation par ledit pédalier 200 et transmet son mouvement de rotation à chacune desdites roues 10 et 11.

Préférentiellement, selon les modes de réalisation représentés sur les figures 2 à 5, la transmission entre la roue d'engrènement 12 et les roues d'entraînement 10 et 11 s'effectue par l'intermédiaire d'un augmentateur 13 permettant d'accélérer la vitesse de rotation des roues 10 et 11 en sortie par rapport à la roue d'engrènement 12 en entrée.

Selon le mode préférentiel de réalisation, ledit augmentateur se présente sous la forme d'une roue crénelée 130, de plus petit diamètre et montée solidaire autour de l'axe de rotation 100 de la roue d'entraînement 10 du premier piston 80.

De plus, la roue d'entraînement 11 est montée en rotation autour d'un axe 110, s'étendant parallèlement à l'axe 100, ladite roue 11 coopérant en engrènement avec la roue d'entraînement 10.

On notera que, selon le mode préférentiel de réalisation, lesdites roues 10 et 11 présentent un diamètre identique et tournent à la même vitesse. Selon d'autres modes de réalisation, lesdites roues peuvent présenter des diamètres différents, modifiant la vitesse relative de rotation l'une par rapport à l'autre.

Par ailleurs, chaque piston 8,9 est monté articulé excentré avec sa roue d'entraînement respective 10,11 de manière à constituer des systèmes mécaniques de bielle-manivelle. Ce type de système fonctionne comme une came et transforme le mouvement de rotation des roues 10,11 en un mouvement de translation des pistons 8,9.

Selon le mode de réalisation représenté sur les figures, chaque piston 8,9 est relié à sa roue d'entraînement respective 10,11 par l'intermédiaire d'une bielle 101,111.

De plus, le déphasage de 180° précédemment évoqué, particulièrement visible sur la figure 4, consiste à monter en rotation, autour d'un axe solidaire et saillant par rapport à la surface de la roue 10, l'extrémité de la bielle 101, tandis que l'extrémité de la bielle 111 est montée en rotation, autour d'un axe solidaire et saillant par rapport à la surface de la roue 11, lesdits axes étant disposés mécaniquement à l'opposé l'un de l'autre, d'un côté et de l'autre des axes respectifs 100,110 de rotation desdites roues 10,11.

Préférentiellement, lesdits axes sont situés en symétrie par rapport au point d'engrènement entre les roues 10 et 11. De plus, les roues 10,11 sont alignées dans un même plan, afin d'aligner les pistons 80,90 et de les disposer l'un au dessus de l'autre, s'affranchissant de retour d'angle.

A ce titre, on notera que les différentes roues 10,11,12 et 130 présentent en périphérie des dentures de formes et de dimensions complémentaires, afin d'autoriser leur accouplement par engrènement.

Selon une caractéristique supplémentaire, selon les modes de réalisation représentés sur les figures 2 à 5, lesdits moyens d'engrènement 7 comprennent un disque d'engrènement 16, ce dernier étant crénelé selon une denture de formes et dimensions complémentaires à la denture équipant ladite roue d'engrènement 12. De plus, ledit disque 16 est équipé de moyens de fixation avec ledit pédalier 200, en particulier avec son plateau 201, notamment de plus grande dimension, ledit disque 16 et ledit plateau 201 étant rendus dès lors solidaires.

Selon le mode préférentiel de réalisation, le disque d'engrènement 16 se présente sous la forme d'une couronne annulaire, crénelée en périphérie et solidarisée avec le plateau 201 par un couple vis-écrou, traversant des orifices correspondants ménagés en vis-à-vis au sein dudit plateau 201 et dudit disque 16. Ce montage s'effectue de manière à disposer le disque 16 vers l'extérieur, par rapport au pédalier 200. On notera que le disque 16 présente aussi un diamètre extérieur supérieur au diamètre dudit plateau 201.

Selon un mode particulier de réalisation, ledit disque 16 se présente sous la forme d'une couronne à 240 dents, tandis que la roue d'engrènement 12 comprend 40 dents. La roue crénelée de l'augmentateur présente, quant à elle, 13 dents. Ces dentures spécifiques permettent d'obtenir un rapport de transmission de 18/46.

Selon un autre mode de réalisation, représenté sur les figures 6 à 8, l'engrènement avec le plateau 201 du pédalier 2 s'effectue directement, sans le disque 16. Pour ce faire, les moyens d'engrènement 7 comprennent une unique roue 70 en lieu et place de la roue d'engrènement 12, sans l'intermédiaire de la roue crénelée 130 de l'augmentateur 13.

Selon une première variante, représentée sur les figures 6 et 7, ladite roue 70 présente une forme spécifique et complémentaire, de manière à venir coopérer directement avec le plateau 201. En particulier, ladite roue 70 présente une denture constituée des dents 71 destinées à coopérer complémentairement avec la denture pointue du plateau 201, En particulier, les dents 71 de la roue 70 peuvent être de forme oblongue, tels des lobes.

Selon un autre mode de réalisation, représenté sur la figure 8, ladite roue 70 présente une denture sur laquelle vient coopérer une chaînette 72 à maillons. Cette chaînette 72 est similaire à la chaîne 204, mais avec une longueur moindre. Elle comprend préférentiellement des maillons identiques.

En somme, la chaînette 72 est montée en engrènement sur la denture de la roue 70, de manière, d'une part, à la rendre solidaire autour de ladite roue 70 et, d'autre part, à permettre à la denture du plateau 201 de venir en engrènement avec ladite chaînette 72, en lieu et place de la denture de la roue 70.

Selon un mode précis de réalisation, ladite chaînette 72 comprend quatorze maillons.

En outre, en cours d'utilisation, la chaîne 204 du cycle 2 est positionnée sur un autre plateau que le plateau 201, laissant ce dernier libre pour recevoir l'engrènement de la roue 70. Une fois cette dernière enclenchée, le fait que la chaîne 204 soit sur un plateau de dimensions inférieures, l'entraînement et, in fine la compression, nécessitent moins d'efforts pour le cycliste. De plus, la démultiplication du couple de rotation assure une force à même de comprimer l'air au sein des chambres 8,9 avec la pression requise.

De plus, ladite roue 70 peut être montée sur cliquet, s'affranchissant d'aucune résistance en cas de rétropédalage et limitant la résistance à l'arrêt. La roue 70 peut aussi être prévue débrayable.

Ainsi, tout type de plateau 201, ayant une denture standardisée, peut coopérer en engrènement avec la chaînette 72 et la roue 70, assurant une compatibilité universelle du dispositif 1 avec tous les cycles 2 existants. Cette compatibilité permet de monter et régler facilement le dispositif 1 sur le cycle 2, sans ajout de pièce au niveau du pédalier 201, ni modifier la structure dudit cycle 2.

Ainsi, en fonctionnement, la rotation du pédalier 200 fait tourner le disque d'engrènement 16 à la même vitesse. L'accouplement avec la roue d'engrènement 12 ou la roue 70 la fait tourner et entraîne à une plus grande vitesse de rotation, notamment par l'intermédiaire de la roue crénelée 130, la roue d'entraînement 10 du piston 8 et, sous l'action de cette dernière, la roue d'entraînement 11 du piston 9. Les pistons 80,90 se déplacent alors en translation et effectuent conjointement leur opération de compression, le premier piston 80 transférant l'air qu'il comprime depuis sa chambre 8 vers la chambre 9, au moment du retour du piston 90, avant sa phase de compression, au travers du décalage à 180°.

Selon une caractéristique additionnelle, le dispositif 1 comprend des moyens de commande (non représentés) de l'accouplement en engrènement de ladite roue d'engrènement 12 avec ledit disque 16 et permettant d'embrayer ou de débrayer manuellement ledit accouplement. Selon un mode de réalisation, visible sur les figures 6 et 7, une partie du dispositif 1 est monté et commandé en translation, de manière à passer d'une position désaccouplée à une position accouplée avec le pédalier 200, et inversement.

De plus, lesdits moyens de commande peuvent comprendre des moyens de mesure de la pression interne de ladite cartouche 3 ou de ladite chambre 9 « haute pression », commandant automatiquement le débrayage de l'accouplement entre le disque 16 et la roue 12, au-delà d'un seuil déterminé. En particulier, ce seuil correspond à une valeur de pression maximale, correspondant au remplissage de ladite cartouche 3. Au-delà de cette pression seuil, le débrayage est enclenché, séparant le disque 16 de la roue 12.

De plus, une valve peut être ajoutée afin de libérer le flux d'air comprimé lors du dépassement de ladite pression seuil, notamment au-delà de 35 bars.

Par ailleurs, le dispositif 1 est entouré au moins en partie par une coque de protection 17, notamment au niveau des engrènements des roues 10,11 et du déplacement des bielles 101,111, protégeant ces éléments et évitant tout danger pour l'utilisateur en cours de fonctionnement lors du mouvement de ces pièces mécaniques.

A ce titre, les pièces constituant le dispositif 1 peuvent être constituées en matériau plastique et/ou composite et/ou métallique, notamment en aluminium, de manière à diminuer leur poids. Ces pièces peuvent aussi recevoir un traitement de surface particulier, augmentant leur résistance et leur durée de vie.

Ainsi, le dispositif 1 selon l'invention assure le stockage d'air comprimé par l'intermédiaire d'une compression à double pistons 80,90, basse et haute pression, fonctionnant simultanément de et façon combinée, facilitant la compression en haute pression.

De plus, le fonctionnement dudit dispositif 1 est assuré lors du pédalage mais aussi en rétropédalage, à savoir dans les deux sens de rotation du pédalier 200.

## Revendications

1. Dispositif de compression d'air (1) pour un cycle (2), le cycle (2) étant équipé d'un pédalier d'entraînement (200), le dispositif de compression (1) comprenant une cartouche de stockage d'air comprimé (3) et des moyens de compression (6) qui sont reliés à la cartouche (3) et sont constitués de moyens d'engrènement (7) avec le pédalier (200), d'une première chambre de compression (8) équipée d'un premier piston à air (80) et d'une deuxième chambre de compression (9) équipée d'un deuxième piston à air (90), **caractérisé en ce que** les moyens d'engrènement (7) sont connectés à chaque piston (80, 90) et entraîne leur course en translation de manière à mettre en compression les chambres correspondantes (8, 9), et **en ce que** la première chambre (8) est reliée à la deuxième chambre (9) de manière à transférer l'air comprimé au sein de la première chambre (8) vers la seconde chambre (9) lors de la compression de cette dernière.

2. Dispositif de compression (1) selon la revendication 1, **caractérisé en ce que** les moyens d'engrènement (7) comprennent une première roue d'entraînement (10) entrainant le premier piston (80) et une deuxième roue d'entraînement (11) entrainant le deuxième piston (90), les deux roues d'entraînement (10, 11) étant montées et entraînées en rotation par une roue d'engrènement (12) engrenée avec le pédalier (200), chaque piston (80, 90) étant monté articulé excentré avec la roue d'entraînement correspondante (10, 11) de manière à constituer des systèmes mécaniques de bielle-manivelle.

3. Dispositif de compression (1) selon la revendication 2, **caractérisé en ce que** les moyens d'engrènement (7) comprennent un disque d'engrènement (16) équipé de moyens de fixation avec le pédalier (200), le disque d'engrènement (16) étant crénelé selon une denture de formes et dimensions complémentaires à la denture équipant la roue d'engrènement (12).

4. Dispositif de compression (1) selon la revendication 2, **caractérisé en ce que** la roue d'engrènement (12) se présente sous la forme d'une unique roue (70) de forme spécifique et complémentaire de manière à venir coopérer directement en engrènement avec la denture d'un plateau (201) du pédalier (200), les dents (71) de l'unique roue (70) étant de forme oblongue.

5. Dispositif de compression (1) selon la revendication 2, **caractérisé en ce que** la roue d'engrènement (12) est une roue (70) présentant une denture sur laquelle vient coopérer une chaînette à maillons (72) enroulée autour de la roue (70).

6. Dispositif de compression (1) selon la revendication 3, **caractérisé en ce qu'**il comprend des moyens de commande de l'accouplement en engrènement de la roue d'engrènement (12) avec le disque d'engrènement (16) et permettant d'embrayer ou de débrayer manuellement l'accouplement.

7. Dispositif de compression (1) selon la revendication 4, **caractérisé en ce qu'**il comprend des moyens de commande de l'accouplement en engrènement de la roue d'engrènement (12) avec le plateau (201) et permettant d'embrayer ou de débrayer manuellement l'accouplement.

8. Dispositif de compression (1) selon l'une des revendications 6 et 7, **caractérisé en ce que** les moyens de commande comprennent des moyens de mesure de la pression interne de la cartouche (3), commandant automatiquement le débrayage de l'accouplement au-delà d'un seuil déterminé.

9. Dispositif de compression (1) selon l'une des revendications 1 à 8, **caractérisé en ce que** la première chambre (8) comprend des dimensions telles que la pression d'air comprimé est inférieure à la pression d'air comprimé par la seconde chambre (9).

10. Dispositif de compression (1) selon la revendication 8, **caractérisé en ce que** la première chambre (8) est reliée à la deuxième chambre (9) par l'intermédiaire d'un clapet antiretour autorisant uniquement le passage de l'air comprimé depuis la première chambre (8) vers la deuxième chambre (9).

## Patentansprüche

1. Luftkompressionsvorrichtung (1) für einen Zyklus (2), wobei der Zyklus (2) mit einem Antriebspedal (200) ausgestattet ist, wobei die Kompressionsvorrichtung (1) eine Druckluftspeicherkartusche (3) und Kompressionsmittel (6) umfasst, die mit der Kartusche (3) verbunden sind und aus Eingriffsmitteln (7) mit dem Pedal (200), einer ersten Kompressionskammer (8), die mit einem ersten Luftkolben (80) und einer zweiten Kompressionskammer (9) bestehen, die mit einem zweiten Luftkolben (90) ausgestattet ist, **dadurch gekennzeichnet, dass** die Eingriffsmittel (7) mit jedem Kolben (80, 90) verbunden sind und ihren Hub translatorisch antreiben, um die entsprechenden Kammern (8, 9) zu komprimieren, und dass die erste Kammer (8) mit der zweiten Kammer (9) verbunden ist, um die Druckluft innerhalb der ersten Kammer (8) auf die zweite Kammer (9) zu übertragen, wenn diese komprimiert wird.

2. Kompressionsvorrichtung (1) nach Anspruch 1, **dadurch gekennzeichnet, dass** die Eingriffsmittef (7) ein erstes Antriebsrad (10), das den ersten Kolben (80) antreibt, und ein zweites Antriebsrad (11), das den zweiten Kolben (90) antreibt, umfassen, wobei die beiden Antriebsräder (10, 11) durch ein Eingriffsrad (12), das mit dem Pedal (200) in Eingriff steht, montiert und in Drehung versetzt sind, wobei jeder Kolben (80, 90) exzentrisch mit dem entsprechenden Antriebsrad (10, 11) gelagert ist, um mechanische Kurbelstangensysteme zu bilden.

3. Kompressionsvorrichtung (1) nach Anspruch 2, **dadurch gekennzeichnet, dass** die Eingriffsmittel (7) eine Eingriffsscheibe (16) umfassen, die mit Befestigungsmitteln mit dem Pedal (200) ausgestattet sind, wobei die Eingriffsscheibe (16) gemäß einer Verzahnung mit Formen und Abmessungen, die zu der das Eingriffsrad (12) ausrüstenden Verzahnung komplementär sind, gezahnt ist.

4. Kompressionsvorrichtung (1) nach Anspruch 2, **dadurch gekennzeichnet, dass** das Eingriffsrad (12) in Form eines einzelnen Rades (70) mit spezifischer und komplementärer Form vorliegt, um direkt mit der Verzahnung einer Platte (201) des Pedals (200) in Eingriff zu kommen, wobei die Zähne (71) des einzelnen Rades (70) länglich sind.

5. Kompressionsvorrichtung (1) nach Anspruch 2, **dadurch gekennzeichnet, dass** das Eingriffsrad (12) ein Rad (70) mit einer Verzahnung ist, an der eine um das Rad (70) gewickelte Gliederkette (72) wirkt.

6. Kompressionsvorrichtung (1) nach Anspruch 3, **dadurch gekennzeichnet, dass** sie Mittel zum Steuern der Eingriffskupplung des Eingriffsrades (12) mit der Eingriffsscheibe (16) umfasst und das manuelle Ein- oder Auskuppeln der Kupplung ermöglicht.

7. Kompressionsvorrichtung (1) nach Anspruch 4, **dadurch gekennzeichnet, dass** sie Mittel zum Steuern der Eingriffskupplung des Eingriffsrades (12) mit der Platte (201) umfasst und das manuelle Ein- oder Auskuppeln der Kupplung ermöglicht.

8. Kompressionsvorrichtung (1) nach einem der Ansprüche 6 und 7, **dadurch gekennzeichnet, dass** die Steuermittel Mittel zum Messen des Innendrucks der Kartusche (3) umfassen, die automatisch das Auskuppeln der Kupplung über einen bestimmten Schwellenwert hinaus steuern.

9. Kompressionsvorrichtung (1) nach einem der Ansprüche 1 bis 8, **dadurch gekennzeichnet, dass** die erste Kammer (8) Abmessungen aufweist, sodass der Druckluftdruck niedriger ist als der Druckluftdruck durch die zweite Kammer (9).

10. Kompressionsvorrichtung (1) nach Anspruch 8, **dadurch gekennzeichnet, dass** die erste Kammer (8) mit der zweiten Kammer (9) über ein Rückschlagventil verbunden ist, das nur Druckluft von der ersten Kammer (8) zur zweiten Kammer (9) strömen lässt.

## Claims

1. Air compression device (1) for a cycle (2), the cycle (2) being equipped with a drive pedal (200), the compression device (1) comprising a compressed air storage cartridge (3) and compression means (6) which are connected to the cartridge (3) and consist of meshing means (7) with the pedal (200) of a first compression chamber (8)) equipped with a first air piston (80) and a second compression chamber (9) equipped with a second air piston (90), **characterized in that** the meshing means (7) are connected to each piston (80, 90) and causes them to travel in translation so as to compress the corresponding chambers (8, 9), and **in that** the first chamber (8) is connected to the second chamber (9) so as to transfer the compressed air within the first chamber (8) to the second chamber (9) during compression of the latter.

2. Compression device (1) according to claim 1, **characterized in that** the meshing means (7) comprise a first driving wheel (10) driving the first piston (80) and a second driving wheel (11) driving the second piston (90), the two driving wheels (10, 11) being mounted and driven in rotation by a meshing wheel (12) meshing with the crank (200), each piston (80, 90) being eccentrically articulated with the corresponding drive wheel (10, 11) so as to constitute mechanical crank-rod systems.

3. Compression device (1) according to claim 2, **characterized in that** the meshing means (7) comprise a meshing disc (16) equipped with fastening means with the crankset (200), the meshing disc (16) being crenellated according to a toothing of shapes and dimensions complementary to the toothing equipping the meshing wheel (12).

4. Compression device (1) according to claim 2, **characterized in that** the meshing wheel (12) is in the form of a single wheel (70) of specific and complementary shape so as to cooperate directly in meshing with the toothing of a plate (201) of the pedal (200), the teeth (71) of the single wheel (70) being oblong in shape.

5. Compression device (1) according to claim 2, **characterized in that** the meshing wheel (12) is a wheel (70) having a toothing on which a chain link is engaged(72) wound around the wheel (70).

6. Compression device (1) according to claim 3, **characterized in that** it comprises the means for controlling the coupling in meshing of the meshing wheel (12) with the meshing disk (16) and to manually engage or disengage the coupling.

7. compression device (1) according to claim 4, **characterized in that** it comprises the means for controlling the coupling in meshing of the meshing wheel (12) with the plate (201) and allowing the coupling to engage or disengage manually.

8. Compression device (1) according to one of claims 6 and 7, **characterized in that** the control means comprise the means for measuring the internal pressure of the cartridge (3), automatically controlling the disengagement of the coupling beyond a determined threshold.

9. compression device (1) according to one of claims 1 to 8, **characterized in that** the first chamber (8) comprises dimensions such that the compressed air pressure is lower than the compressed air pressure by the second chamber (9).

10. Compression device (1) according to claim 8, **characterized in that** the first chamber (8) is connected to the second chamber (9) via a non-return valve allowing only the passage of compressed air from the first chamber (8) to the second chamber (9).
